# EUROPEAN PATENT SPECIFICATION

(11) **EP 2 730 770 B1**
(45) Date of publication and mention of the grant of the patent: **28.09.2016**
(21) Application number: 13191930.0
(22) Date of filing: 07.11.2013
(51) Int. Cl.: F02D 41/02, F02D 31/00

(54) **Method and device for disengagement of a clutch device**
Verfahren und Vorrichtung zum Ausrücken einer Kupplungsvorrichtung
Procédé et dispositif pour le débrayage d'un dispositif d'embrayage

(30) Priority: 09.11.2012 SE 1251269
(43) Date of publication of application: 14.05.2014
(73) Proprietor: Scania CV AB, 151 87 Södertälje (SE)
(72) Inventor: Gångfeldt, Hans, 125 41 Älvsjö (SE); Larsén, Per, 152 57 Södertälje (SE)
(74) Representative: Scania CV AB

(56) References cited:
- EP-A2- 1 413 724
- DE-T2-602005 001 104
- JP-A- 2008 025 747

## Description

### TECHNICAL BACKGROUND OF THE INVENTION AND PRIOR ART

The present invention concerns the facilitation of disengagement of a clutch in vehicles. The invention concerns in particular a method according to the preamble to claim 1 and a control system according to the preamble to claim 8. The invention also concerns a computer program according to claim 6 and a computer-readable medium according to claim 7.

In addition to optimizing the degree of fuel utilization, combustion engines for vehicles are normally designed with the purpose of delivering operation that is as uniform as possible within a typical working range, as this affords good comfort to those traveling in the vehicle. Other components in the drive train, such as the gearbox and clutch, are also often designed with this objective in mind.

For example, JP 2000-039036 describes a solution in which disuniformities are reduced in the power transfer between the engine and the gearbox in a vehicle, so that the comfort of the vehicle driver and passengers is improved. During gear shifting, the fuel injection to the engine is adjusted here so that the torque on the driveshaft reaches a predetermined value before the disengagement of the clutch is triggered or reengagement of the same is brought about.

US 2005/0124460 describes a fuel-saving system for a vehicle, wherein the fuel supply to the engine is stopped temporarily in conjunction with reducing the engine rpm during shifting. The interval without fuel supply can vary, depending on the current operating state of the vehicle in terms of both stopping and starting, with a view to optimizing comfort and function.

EP 1 413 724 A2 describes the reduction of a fuel injection amount during gear shift to prevent the amount of particulates in exhaust gas from inceasing.

### PROBLEMS ASSOCIATED WITH THE PRIOR ART

The foregoing solutions are intended to achieve a transfer of power that is as uniform as possible. Certain modern engines, such as V8 engines, run so uniformly that the clutch plates tend to be drawn securely to the engine flywheel even though the clutch has been opened, i.e. despite the fact that disengagement has been performed. The transfer of torque is thus not interrupted immediately, but rather the disengagement is delayed. When the disengagement of the clutch is delayed, for example, disengagement of the current gear during a gear shift or freewheeling is made more difficult.

### SUMMARY OF THE INVENTION

The object of the present invention is to provide a solution that alleviates the foregoing problems and facilitates disengagement of a clutch in a vehicle that is equipped with a combustion engine that runs relatively uniformly.

According to one aspect of the invention, this object is achieved by means of the control system described above, wherein a control unit is configured so as to receive a control signal indicating the initiation of a disengagement, whereupon the clutch is thus intended to be brought to an open position. In response thereto, the control unit is configured so as, during an activation interval, to generate an adjustment signal in such a way that a temporary deviation in the form of a disruption of the engine rpm is brought about. After the activation interval, the control unit is configured so as to inhibit the generation of the adjustment signal, whereupon the temporary deviation/disruption of the engine rpm is discontinued.

This system is desirable because a temporary deviation/disruption in an otherwise uniform torque on the drive shaft of the engine facilitates the freeing of the plate elements in a clutch device, so that gear disengagement can be achieved and, for example, a gear shift or freewheeling can be performed in a reliable and effective manner.

According to one embodiment of this aspect of the invention, the control unit is configured so as to generate the adjustment signal during the activation interval, so that a torque generated on the output drive shaft of the combustion engine deviates from a nominal characteristic for the combustion engine over an angle interval of the drive shaft corresponding to at least one working cycle for a cylinder of the combustion engine. Specifically, the generated torque on the drive shaft can be caused to exceed or undershoot a nominal torque over an angle interval of the drive shaft corresponding to at least one working cycle for a cylinder of the combustion engine. In addition, or as an alternative thereto, the torque generated in the drive shaft by the combustion engine can be shifted in time in relation to a nominal time sequence for one working cycle of the combustion engine during at least one period corresponding to one working cycle for a cylinder of the combustion engine.

The activation interval can either have a predetermined duration or its chronological extent can vary. For example, the activation interval can be defined so that it ends when the combustion engine exhibits a certain rpm, or following completion of a certain number of working cycles. This makes it possible to ensure that the disruption of the torque on the drive shaft will be of sufficient, but not unnecessary, magnitude for a disengagement and, for example, subsequent disengagement of a gear.

According to another embodiment of this aspect of the invention, the motor vehicle includes a manual clutch device between the output drive shaft of the engine and the gearbox. A manual clutch device indicates that the driver initiates a disengagement procedure either by means of a mechanical linkage from the pedal to an actuator that in turn acts upon the clutch, or by means of an electrical signal that travels from the pedal to the actuator. The manual clutch device is further assumed to be configured so as, in response to a disengagement signal from a pedal, to bring about a mechanical disengagement of at least a first plate element connected to the output drive shaft of the engine via the flywheel of the engine from at least a second plate element connected to the gearbox, i.e. so as to open the clutch device completely. The control unit is further configured so as to receive the disengagement signal and process it as the aforementioned control signal.

According to yet another embodiment of this aspect of the invention, the clutch device is of an automatic type. An automatic clutch device indicates that a control unit in the vehicle initiates the disengagement procedure. Here the control unit is instead configured so as to receive the control signal from a control unit in the vehicle, for example, the control unit of the clutch device or the gearbox, in connection with the initiation of a disengagement procedure.

The proposed procedure is initiated in an effective manner in the case of both a manual and an automatic disengagement device.

According to another aspect of the invention, the object is achieved by means of the method described above, wherein a control signal is received that indicates an initiation of a disengagement procedure, whereupon the clutch device is thus to be brought to an open position. An adjustment signal is generated in response thereto during an activation interval in such a way that a temporary deviation in the form of a disruption in the engine rpm is brought about. Generation of the adjustment signal is subsequently inhibited, whereupon the temporary deviation/disruption is discontinued. The advantages of this method and the preferred embodiment thereof are presented in the foregoing discussion with reference to the proposed control system.

According to yet another aspect of the invention, the object is achieved by means of a computer program that is downloadable to the internal memory of a computer and comprises software for controlling the steps according to the method proposed above when said program is run on a computer.

According to yet another aspect of the invention, the object is achieved by means of a computer-readable medium with a program stored thereon, wherein the program is adapted so as to enable a computer to control the steps according to the method proposed above.

### BRIEF DESCRIPTION OF THE DRAWINGS

The present invention will now be described in greater detail by means of embodiments, which are described as examples, and with reference to the accompanying drawings.
- Figure 1: shows a schematic view of a motor vehicle that includes a control system according to one embodiment of the invention;
- Figure 2a, b: shows a diagram illustrating how the torque of a combustion engine can be caused to temporarily exceed or undershoot a nominal torque according to embodiments of the invention;
- Figure 3a, b: shows a diagram illustrating how the torque of a combustion engine can be caused to be shifted in time in relation to a nominal time sequence for its working cycles according to one embodiment of the invention; and
- Figure 4: schematically shows a flow diagram that illustrates the method according to the invention.

### DESCRIPTION OF EMBODIMENTS OF THE INVENTION

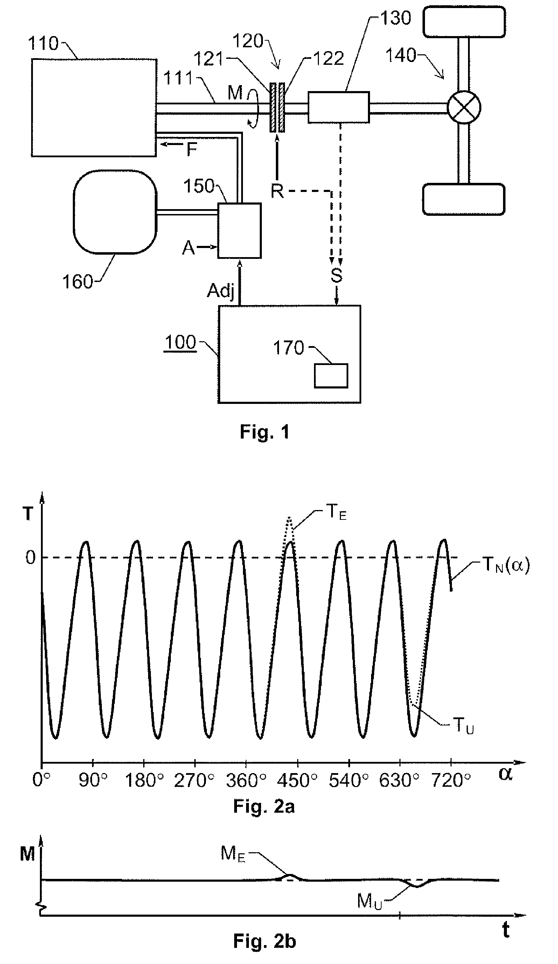

Figure 1 shows a schematic view of a motor vehicle that includes a control system according to one embodiment of the invention.

The motor vehicle includes a drive train comprising a combustion engine 110 with an output drive shaft 111, a gearbox 130 that is mechanically connectable to the drive shaft 111 and a drive wheel arrangement 140, which is in turn mechanically connected to the gearbox 130. The gearbox 130 can be of a manual or automatic type, or an automatically actuated manual gear box (a so-called AMT).

The drive train of the motor vehicle also includes a clutch device 120, which can be of a manual or automatic type. The clutch device 120 in turn includes at least one first plate element 121 directly or indirectly connected to the drive shaft 111 and at least one second plate element 122 connected with the gearbox 130, which at least one first plate element 121 can be caused to selectively engage or disengage from said at least one second plate element 122 on the basis of a release signal R, either from a clutch pedal in the vehicle or a control unit therein.

The motor vehicle also includes a fuel injection unit 150 configured so as to generate a control parameter, which affects the fuel injection F of the combustion engine 110. This effect on the fuel injection can be based on an accelerator depression signal and, for example, cause the combustion engine 110 to deliver a certain engine rpm and/or a certain engine torque. The vehicle further includes a fuel tank 160, which supplies the fuel injection unit with fuel in the form of, for example, diesel, gasoline or ethanol.

The proposed control system comprises a control unit 100, which is configured so as to generate an adjustment signal Adj, which is arranged so as to regulate said at least one control parameter for the fuel injection F. Specifically, the control unit 100 is configured so as to receive a control signal S indicating that a disengagement procedure for the clutch is being initiated, i.e. that the clutch device 120 is intended to be brought to an open/disengaged position. In response to the control signal S the control unit 100 is configured so as, during an activation interval, to generate the adjustment signal Adj in such a way that a temporary deviation in the form of a disruption of the engine rpm M is brought about. After the activation interval has run out, the control unit 100 is configured so as to inhibit generation of the adjustment signal Adj.

If the control of the clutch device 120 is of a manual type, the control unit 100 is further configured so as to receive the disengagement signal R from the clutch pedal and process it as the control signal S on the basis of which the adjustment signal Adj is generated.

If the control of the clutch device 120 is, instead, of the automatic type, the control unit 100 is further configured so as to receive the control signal S in connection with the initiation of the disengagement procedure, either directly from the gearbox 130 or from another control unit in the motor vehicle.

Figure 2a shows a diagram that illustrates an example of the torque T of the combustion engine 110 as a function of the angle of rotation α of the drive shaft 111. In the illustrated example, it is assumed that the combustion engine has eight cylinders, wherein the variations in the torque T correspond to eight entire combustion cycles while the drive shaft 111 rotates twice, i.e. within the range α = 0° to α = 720°.

Figure 2b shows a corresponding diagram in which the rpm M of the combustion engine 110 is presented as a function of the time t.

In connection with the initiation of disengagement, the control unit 100 generates the adjustment signal Adj, so that a temporary deviation occurs in the engine rpm M of the drive shaft 111. According to embodiments of the invention, this can be achieved in various ways, two of which are illustrated in Figures 2a and 2b.

For example, a larger amount of fuel F can be injected into the combustion chamber of the cylinders, e.g. 10% more fuel in one or a plurality of cylinders, which results in the torque T being caused to temporarily exceed T_{E} a nominal value T_{N}(α), as is illustrated in Figure 2a for α ≈ 400°. As a result, the engine rpm M also increases temporarily to a higher level M_{E}.

Alternatively a smaller amount of fuel F than normal can be injected, e.g. 10% less fuel into one or a plurality of the cylinders, which results in the torque T bring caused to temporarily undershoot T_{U} the nominal level T_{N}(α), as is illustrated in Figure 2a for α ≈ 680°. As a result, the engine rpm M instead falls to a lower level M_{U} than normal.

The activation interval preferably corresponds to at least one working cycle for a cylinder of the combustion engine 110. According to embodiments of the invention, the activation interval can either have a certain duration in time t, or its duration in time t can vary. For example, the activation interval can be defined so that it ends when the drive shaft 111 of the combustion engine 110 exhibits a certain engine rpm M, or upon completion of a certain number of working cycles. The length and chronological disposition of the activation interval is set so that the disruption of the torque T on the drive shaft 111 is of sufficient, but not unnecessary, magnitude for it to be possible to perform a release with possible subsequent disengagement of a gear.

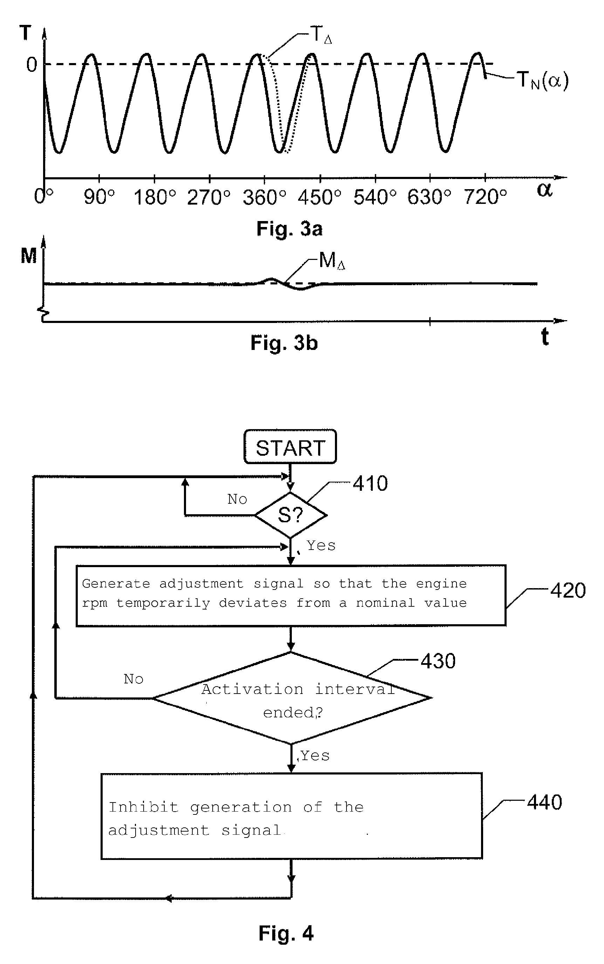

Figures 3a and 3b show diagrams corresponding to those in Figure 2a and 2b respectively, but wherein the torque T generated in the drive shaft 111 by the combustion engine is instead shifted in time by T_{Δ} in relation to the nominal time sequence T_{N}(α) for the working cycles of the combustion engine 110. Figure 3a clarifies this, in that a firing stroke at α ≈ 350° - 380° is prolonged somewhat and a subsequent firing stroke at α ≈ 380° - 440° is shortened somewhat. This results in turn in the engine rpm first increasing an M_{Δ} and then decreasing somewhat an M_{Δ} in relation to the nominal level. A disruption in the engine rpm M suitable for facilitating a disengagement of the clutch by the disengagement device 120 is introduced in a manner analogous with the aforedescribed.

The foregoing examples of different ways of bringing about temporary deviations/disruptions can, as a part of the method according to the invention, also be repeated and/or combined in appropriate ways. The total length and chronological disposition of the activation interval is set so that the total disruption of the torque T on the drive shaft 11 is of sufficient, but not unnecessary, magnitude for it to be possible to perform a disengagement/opening of the clutch device 120 in these cases as well.

Said disruption in the engine rpm M, and in the torque T, is a temporary disruption. Said disruption can comprise a plurality of deviations/disruptions in the rpm/torque of the engine during a temporary activating interval. Said disruption can comprise a periodic deviation/disruption in the rpm/torque of the engine during the temporary activation interval.

Said disruption can comprise one or a plurality of disruptive fluctuations in the rpm/torque of the engine. Said disruption comprises the bringing about of at least one disuniformity/variation in the rpm/torque of the engine during the activation interval.

Said disruption has the result that a combustion engine 110 that, under general/normal/common operation runs essentially uniformly will run less uniformly under said activation interval. Said disruption results in a combustion engine 110 running less uniformly during said activation interval.

Said disruption can comprise the application/inducing of at least one temporary vibration in the drive train during said activation interval. Said disruption can comprise the application/inducing of at least one temporary shake in the drive train during said activation interval. Said disruption can comprise the application/inducing of at least one temporary jolt in the drive train during said interval.

Said disruption can comprise the bringing about of at least one disuniformity in the engine rpm M during said activation interval. Said disruption can comprise the bringing about of at least one disuniformity in the torque T of the engine during said activation interval.

The method according to the invention for facilitating the performance of release in motor vehicles will now be described with reference to Figure 4. The motor vehicle includes a combustion engine 110 with an output drive shaft 111, a gearbox 130 that is mechanically connectable with the drive shaft 111, and a drive wheel arrangement 140 that is mechanically connected with the gearbox 130. The motor vehicle also includes a fuel injection unit 150 configured so as to generate a control parameter that affects the fuel injection F to the combustion engine 110. This effect on the fuel injection can be based on an accelerator depression signal, and result in, for example, the combustion engine 110 delivering a certain engine rpm and/or engine torque.

In a first step 410, a determination is made as to whether a control signal S has been received, which indicates that a disengagement procedure has been initiated, i.e. that the intent is to bring the clutch device 120 to an open/released position. If such is the case, a step 420 follows; otherwise the method loops back and stops in step 410.

In step 420, an adjustment signal Adj is generated for the accelerator depression signal A in such a way that a temporary deviation/disruption in the engine rpm M is brought about.

A determination is then made in a step 320 as to whether an activating interval has run out. If such is the case, there follows a step 440; otherwise the method loops back to step 420.

Step 440 inhibits the generation of the adjustment signal Adj, whereupon the temporary deviation/disruption is discontinued/concluded/ends/ceases. In other words, the combustion engine 110 here resumes delivering an engine rpm M and a torque T in accordance with a nominal characteristic. The procedure subsequently loops back to step 410.

Furthermore, although the embodiments of the invention described above with reference to the figures comprise a computer and processes performed in a computer, the invention extends to a computer program, particularly a computer program on or in a carrier adapted so as to implement the invention practically. The program can be in the form of source code, object code, a code that constitutes something intermediate between source and object code, such as code in partly compiled form, or in any other form whatsoever that is suitable for use in implementing the process according to the invention. The carrier can be any arbitrary entity or device that is capable of serving as a medium for the program. For example, the carrier can comprise a storage medium such as a flash memory, a ROM (Read Only Memory), for example a CD (Compact Disc) or a semiconductor-ROM, EPROM (Electrically Programmable ROM), EEPROM (Erasable EPROM), or a magnetic recording medium such as a floppy disk or hard drive. The carrier can also be a transmitted carrier such as an electrical or optical signal, which can be conducted through an electrical or optical cable or by radio in some other way. When the program is realized as a signal that can be conducted directly by a cable or other device or element, the carrier can consist of such a cable, device or element. Alternatively, the carrier can be an integrated circuit in which the program is embedded, wherein the integrated circuit is adapted so as to perform, or to be used in connection with the performance of, the relevant processes.

The invention is not limited to the embodiments described with reference to the figures, but rather can be varied freely within the scope of the following claims.

It should be noted that the general inventive idea is also applicable to, for example, an at least partly electrified drive train. The engine 110 can consist of/correspond to an electric machine, which is powered by electrical energy from, for example, an energy storage unit in the motor vehicle. The engine 110 can also consist of/correspond to a combustion engine and an electric machine that interwork in a so-called parallel hybrid drive train. In these types of drive trains the power supply to the electric machine can be controlled during the aforementioned activation interval so that a temporary deviation (M_{E}, M_{U}, M_{Δ}) in the form of a disruption of the engine rpm (M) is brought about. In connection with a parallel hybrid drive train, the power supply to the electric machine can be controlled during the aforementioned activation interval in such a way that a temporary deviation (M_{E}, M_{U}, M_{Δ}) in the form of a disruption of the engine rpm (M) is brought about in combination with the fuel injection to the combustion engine being controlled in such a way that a temporary deviation (M_{E}, M_{U}, M_{Δ}) in the form of a disruption of the engine rpm (M) is brought about. In these examples, an electric machine can be controlled so as to bring about essentially corresponding torque/rpm changes in a combustion engine in the present application, or alternatively other suitable torque/rpm changes that fulfill the object of the invention.

## Claims

1. A method for controlling a drive train in a vehicle that includes a combustion engine (110) with an output drive shaft (111), a gearbox (130) that is mechanically connected with the drive shaft (111) via a clutch device (120) and a drive wheel arrangement (140) that is mechanically connected with the gearbox (130), wherein the drive train further includes a fuel injection unit (150) configured so as to generate a control parameter which affects the fuel injection (F) to the combustion engine (110), which method comprises:
- generation of an adjustment signal (Adj) arranged so as to regulate said at least one control parameter,
**characterized by** the method being arranged for facilitating disengagement of the clutch device (120), and further comprising:
- reception of a control signal (S) indicating an initiation of a disengagement procedure, wherein the clutch device (120) is intended to be brought to an open position and, in response thereto
- during an activation interval, generation of the adjustment signal (Adj) in such a way that a temporary deviation (M_{E}, M_{U}, M_{Δ}) in the form of a disruption of the engine rpm (M) is achieved, and thereafter
- inhibition of the generation of the adjustment signal (Adj), such that the temporary deviation/disruption in an otherwise uniform torque on the output drive shaft (111) of the combustion engine (110) is achieved to facilitate freeing of plate elements in the clutch device (120).

2. The method according to claim 1, wherein the adjustment signal (Adj) is generated during the activation interval so that a torque (T) generated in the drive shaft (111) by the combustion engine (11) deviates (T_{E}, T_{U}, T_{Δ}) from a nominal characteristic (T_{N}(α)) for the combustion engine (110) over an angle interval of the drive shaft (111) corresponding to at least one working cycle for a cylinder of the combustion engine (110).

3. The method according to claim 2, wherein the adjustment signal (Adj) is generated during the activation interval so that the torque (T) generated in the drive shaft (111) by the combustion engine (11) exceeds (T_{E}) a nominal torque (T_{N}(α)) over an angle interval of the drive shaft (111) corresponding to at least one working cycle for a cylinder of the combustion engine (110).

4. The method according to claim 2, wherein the adjustment signal (Adj) is generated during the activation interval so that the torque (T) generated in the drive shaft (111) by the combustion engine (110) undershoots (T_{U}) a nominal torque (T_{N}(α)) over an angle interval of the drive shaft (111) corresponding to one working cycle for a cylinder of the combustion engine (110).

5. The method according to any of the preceding claims, wherein the adjustment signal (Adj) is generated during the activation interval so that the torque (T) generated in the drive shaft (111) by the combustion engine (110) is shifted in time (T_{Δ}) in relation to a nominal time sequence (T_{N}(α)) for a working cycle of the combustion engine (110) at least during a period corresponding to one working cycle for a cylinder of the combustion engine (110).

6. A computer program that is downloadable to the internal memory (170) of a computer and comprises software for controlling the steps according to any of the preceding claims when said program is run on the computer.

7. A computer-readable medium (170) with a program stored thereon, wherein the program is adapted so as to enable a computer to control the steps according to any of claims 1 to 5.

8. A control system for a drive train of a motor vehicle, which includes a combustion engine (110) with an output drive shaft (111), a gearbox (130) that is mechanically connectable with the drive shaft (111) via a clutch device (120) and a drive wheel arrangement (140) that is mechanically connected with the gearbox (130), wherein the drive train further includes a fuel injection unit (150) configured so as to generate at least one control parameter, which affects the fuel injection (F) to the combustion engine (110), which control system comprises:
- a control unit (100) configured so as to generate an adjustment signal (Adj) arranged so as to regulate said at least one control parameter, **characterized in that** the control unit (100) is configured for facilitating disengagement of the clutch device (120), and so as to:
- receive a control signal (S) indicating an initiation of a disengagement procedure, wherein the clutch device (120) is intended to be brought to an open position, and in response thereto
- during an activation interval, generate the adjustment signal (Adj) in such a way that a temporary deviation (M_{E}, M_{U}, M_{Δ}) in the form of a disruption of the engine rpm (M) is achieved, and thereafter
- inhibit the generation of the adjustment signal (Adj), such that the temporary deviation/disruption in an otherwise uniform torque on the output drive shaft (111) of the combustion engine (110) is achieved to facilitate freeing of plate elements in the clutch device (120).

9. The control system according to claim 8, wherein the control unit (100) is configured so as, during the activation interval, to generate the adjustment signal (Adj) so that a torque (T) generated in the drive shaft (111) by the combustion engine (11) deviates (T_{E}, T_{U}, T_{Δ}) from a nominal characteristic (T_{N}(α)) for the combustion engine (110) over an angle interval of the drive shaft (111) corresponding to at least one working cycle for a cylinder of the combustion engine (110).

10. The control system according to claim 9, wherein the control unit (100) is configured so as, during the activation interval, to generate the adjustment signal (Adj) so that the torque (T) generated in the drive shaft (111) by the combustion engine (11) exceeds (T_{E}) a nominal torque (T_{N}(α)) over an angle interval of the drive shaft (111) corresponding to at least one working cycle for a cylinder of the combustion engine (110).

11. The control system according to claim 9, wherein the control unit (100) is configured so as, during the activation interval, to generate the adjustment signal (Adj) so that the torque (T) generated in the drive shaft (111) by the combustion engine (110) undershoots (T_{U}) a nominal torque (T_{N}(α)) over an angle interval of the drive shaft (111) corresponding to at least one working cycle for a cylinder of the combustion engine (110).

12. The control system according to any of claims 9 to 11, wherein the control unit (100) is configured so as, within the activation interval, to generate the adjustment signal (Adj) so that the torque (T) generated in the drive shaft (111) by the combustion engine (11) is shifted in time (T_{Δ}) in relation to a nominal time sequence (T_{N}(α)) for a working cycle of the combustion engine (110) at least during a period corresponding to one working cycle for a cylinder of the combustion engine (110).

13. The control system according to any of claims 8 to 12, wherein the motor vehicle includes a manual disengagement device (120) between the drive shaft (111) and the gearbox (130), which manual disengagement device (120) is configured so as, in response to a disengagement signal (R), bring about a mechanical disengagement of at least one first plate element (121) connected with the drive shaft (111) from at least one second plate element (122) connected to the gearbox (130), and the control unit (100) is further configured so as to receive the disengagement signal (R) and process it as the control signal (S).

14. The control system according to any of claims 8 to 12, wherein the gearbox (130) is of an automatic type and the control unit (100) is further configured so as to receive the control signal (S) from the gearbox (130) in connection with initiation of the procedure to disengage from a gear.

## Patentansprüche

1. Verfahren zum Steuern eines Antriebsstrangs in einem Kraftfahrzeug, das einen Verbrennungsmotor (110) mit einer Abtriebswelle (111), ein Getriebe (130), das mit der Antriebswelle (111) mittels einer Kupplungseinheit (120) mechanisch verbunden ist und eine Antriebsradanordnung (140) umfasst, die mit dem Getriebe (130) mechanisch verbunden ist, wobei der Antriebsstrang weiter eine Kraftstoffeinspritzeinheit (150) umfasst, die dazu eingerichtet ist, dass sie einen Steuerparameter erzeugt, der die Kraftstoffeinspritzung (F) in den Verbrennungsmotor (110) beeinflusst, wobei das Verfahren umfasst:
- Erzeugung eines Anpassungssignals (Adj), das dazu ausgebildet ist, dass es wenigstens einen Steuerparameter regelt,
**gekennzeichnet durch** das Verfahren, das dazu ausgebildet ist, die Abkoppelung der Kupplungseinheit (120) zu erleichtern, und weiter umfassend:
- Aufnahme eines Steuersignals (S), das eine Einleitung eines Abkoppelungsprozesses anzeigt, wobei die Kupplungseinheit (120) dazu vorgesehen ist, als Antwort darauf in eine offene Stellung gebracht zu werden,
- während einem Aktivierungsintervall Erzeugen des Anpassungssignals (Adj) derart, dass eine temporäre Abweichung (M_{E}, Mᵤ, Mₐ) in der Form einer Unterbrechung der Motordrehzahl (M) erreicht wird, und danach
- Einleiten der Erzeugung des Anpassungssignals (Adj), so dass die temporäre Abweichung/Unterbrechnung eines anderweitig einheitlichen Drehmoments an die Abtriebswelle (111) des Verbrennungsmotors (110) erreicht wird, um das Freilegen der Plattenelemente in der Kupplungseinheit (120) zu erleichtern.

2. Verfahren nach Anspruch 1, wobei das Anpassungssignal (Adj) während dem Aktivierungintervall erzeugt wird, so dass sich ein in der Antriebswelle (111) durch den Verbrennungsmotor (11) erzeugtes Drehmoment (T) von einer nominellen Charakteristik (T_{N}(α)) für den Verbrennungsmotor (110) über ein Winkelintervall der Antriebswelle (111) unterscheidet, das wenigstens einem Arbeitszyklus für einen Zylinder des Verbrennungsmotors (110) entspricht.

3. Verfahren nach Anspruch 2, wobei das Anpassungssignal (Adj) während des Aktivierungsintervalls erzeugt wird, so dass ein in der Antriebswelle (111) durch den Verbrennungsmotor (11) erzeugtes Drehmoment (T) ein Nenndrehmoment (T_{N}(α)) über ein Winkelintervall der Antriebswelle (111) übersteigt (T_{E}), das wenigstens einem Arbeitszyklus für einen Zylinder des Verbrennungsmotors (110) entspricht.

4. Verfahren nach Anspruch 2, wobei das Anpassungssignal (Adj) während des Aktivierungsintervalls erzeugt wird, so dass ein in der Antriebswelle (111) durch den Verbrennungsmotor (11) erzeugtes Drehmoment (T) ein Nenndrehmoment (T_{N} (α)) über ein Winkelintervall der Antriebswelle (111) unterschreitet (T_{U}), das wenigstens einem Arbeitszyklus für einen Zylinder des Verbrennungsmotors (110) entspricht.

5. Verfahren nach einem der vorherigen Ansprüche, wobei das Anpassungssignal (Adj) während des Aktivierungsintervalls erzeugt wird, so dass ein in der Antriebswelle (111) durch den Verbrennungsmotor (11) erzeugtes Drehmoment (T) hinsichtlich einem nominellen Zeitablauf (T_{N} (α)) für einen Arbeitszyklus des Verbrennungsmotors (110) wenigstens während einer Periode zeitlich versetzt (T_{Δ}) ist, die wenigstens einem Arbeitszyklus für einen Zylinder des Verbrennungsmotors (110) entspricht.

6. Computerprogramm, das auf einen internen Speicher (170) eines Computers herunterladbar ist und eine Software zum Steuern der Schritte nach einem der vorhergehenden Ansprüche umfasst, wenn das Programm auf dem Computer ausgeführt wird.

7. Computerlesbares Medium (170) mit einem Programm, das darauf gespeichert ist, wobei das Programm dazu ausgerichtet ist, einem Computer zu ermöglichen, die Schritte nach einem der Ansprüche 1-5 zu steuern.

8. Steuersystem für einen Antriebsstrang eines Kraftfahrzeugs, das einen Verbrennungsmotor (110) mit einer Abtriebswelle (111), ein Getriebe (130), das mit dem Antriebsstrang mittels einer Kupplungseinheit (120) mechanisch verbindbar ist und eine Antriebsradanordnung (140) umfasst, die mit dem Getriebe (130) mechanisch verbunden ist, wobei der Antriebsstrang weiter eine Kraftstoffeinspritzeinheit (150) umfasst, die dazu eingerichtet ist, dass sie wenigstens einen Steuerparameter erzeugt, der die Kraftstoffeinspritzung (F) an dem Verbrennungsmotor (110) beeinflusst, wobei das Steuersystem umfasst:
- eine Steuereinheit (100), die dazu eingerichtet ist, dass sie ein Anpassungssignal (Adj) erzeugt, das dazu ausgebildet ist, dass es wenigstens einen Steuerparameter regelt,
**dadurch gekennzeichnet, dass** die Steuereinheit (100) zum Erleichtern der Abkoppelung der Kupplungseinheit (120) eingerichtet ist, und zum:
- Annehmen eines Steuersignal (S), das eine Einleitung eines Abkoppelungsprozess anzeigt, wobei die Kupplungseinheit (120) dazu vorgesehen ist, als Antwort darauf in eine offene Stellung gebracht zu werden,
- während einem Aktivierungsintervall Erzeugen des Anpassungssignals (Adj) derart, dass eine temporäre Abweichung (M_{E}, Mᵤ, M_{Δ}) in der Form einer Unterbrechung der Motordrehzahl (M) erreicht wird, und danach
- Einleiten der Erzeugung des Anpassungssignals (Adj), so dass die temporäre Abweichung/Unterbrechung eines anderweitig einheitlichen Drehmoments an die Abtriebswelle (111) des Verbrennungsmotors (110) erreicht wird, um das Freilegen der Plattenelemente in der Kupplungseinheit (120) zu erleichtern.

9. Steuersystem nach Anspruch 8, wobei die Steuereinheit (100) dazu eingerichtet ist, während dem Aktivierungsintervall das Anpassungssignal (Adj) zu erzeugen, so dass sich ein in der Antriebswelle (111) durch den Verbrennungsmotor (11) erzeugtes Drehmoment (T) von einer nominellen Charakteristik (T_{N} (α)) für den Verbrennungsmotor (110) über ein Winkelintervall der Antriebswelle (111) unterscheidet (T_{E}, T_{A}, T_{Δ}), das wenigstens einem Arbeitszyklus für einen Zylinder des Verbrennungsmotors (110) entspricht.

10. Steuersystem nach Anspruch 9, wobei die Steuereinheit (100) dazu eingerichtet ist, während dem Aktivierungsintervall das Anpassungssignal (Adj) zu erzeugen, so dass ein in der Antriebswelle (111) durch den Verbrennungsmotor (11) erzeugtes Drehmoment (T) ein Nenndrehmoment (T_{N} (α)) über ein Winkelintervall der Antriebswelle (111) übersteigt (T_{E}), das wenigstens einem Arbeitszyklus für einen Zylinder des Verbrennungsmotors (110) entspricht.

11. Steuersystem nach Anspruch 9, wobei die Steuereinheit (100) dazu eingerichtet ist, während dem Aktivierungsintervall das Anpassungssignal (Adj) zu erzeugen, so dass ein in der Antriebswelle (111) durch den Verbrennungsmotor (11) erzeugtes Drehmoment (T) ein Nenndrehmoment (T_{N} (α)) über ein Winkelintervall der Antriebswelle (111) unterschreitet (T_{U}), das wenigstens einem Arbeitszyklus für einen Zylinder des Verbrennungsmotors (110) entspricht.

12. Steuersystem nach Anspruch 9, wobei die Steuereinheit (100) dazu eingerichtet ist, während dem Aktivierungsintervall das Anpassungssignal (Adj) zu erzeugen, so dass ein in der Antriebswelle (111) durch den Verbrennungsmotor (11) erzeugtes Drehmoment (T) hinsichtlich einem nominellen Zeitablauf (T_{N} (α)) für einen Arbeitszyklus des Verbrennungsmotors (110) wenigstens während einer Periode zeitlich versetzt ist (T_{Δ}), die wenigstens einem Arbeitszyklus für einen Zylinder des Verbrennungsmotors (110) entspricht.

13. Steuersystem nach einem der Ansprüche 8-12, wobei das Kraftfahrzeug eine manuelle Abkoppelungseinheit (120) zwischen der Antriebswelle (111) und dem Getriebe (130) umfasst, wobei die manuelle Abkoppelungseinheit (120) dazu eingerichtet ist, als Antwort auf ein Abkoppelungssignal (R), eine mechanische Abkoppelung von wenigstens einem mit der Antriebswelle (111) verbundenen ersten Plattenelement (121) von einem mit dem Getriebe (130) verbundenen zweiten Plattenelement (122) zu veranlassen, und die Steuereinheit (100) weiter dazu eingerichtet ist, das Abkopplungssignal (R) aufzunehmen und dieses als das Steuersignal (S) zu verarbeiten.

14. Steuersystem nach einem der Ansprüche 8-12, wobei das Getriebe (130) ein automatisch ausgebildet ist und die Steuereinheit (100) weiter dazu eingerichtet ist, von dem Getriebe (130) das Steuersignal (S) in Verbindung mit der Einleitung der Gangabkopplungsprozedur aufzunehmen.

## Revendications

1. Procédé de commande d'un train de transmission dans un véhicule qui comporte un moteur à combustion (110) ayant un arbre de transmission de sortie (111), une boîte de vitesse (130) qui est couplée mécaniquement à l'arbre de transmission (111) via un dispositif d'embrayage (120) et un agencement de roues motrices (140) qui est couplé mécaniquement à la boîte de vitesse (130), le train de transmission comportant en outre une unité d'injection de carburant (150) configurée pour générer un paramètre de commande, qui affecte l'injection de carburant (F) dans le moteur à combustion (110), lequel procédé comprend :
- la génération d'un signal d'ajustement (Adj) conçu pour réguler ledit au moins un paramètre de commande,
**caractérisé en ce que** le procédé est conçu pour faciliter le désengagement du dispositif d'embrayage (120), et comprend en outre :
- la réception d'un signal de commande (S) indiquant un démarrage d'une procédure de désengagement, le dispositif d'embrayage (120) étant destiné à être amené à une position ouverte et, en réponse à cette action
- pendant un intervalle d'activation, la génération du signal d'ajustement (Adj) de telle sorte qu'un écart temporaire (M_{E}, M_{U}, M_{Δ}) sous la forme d'une interruption de rotation du moteur (M) soit obtenu, puis
- l'empêchement de la génération du signal d'ajustement (Adj), de telle sorte que l'écart/interruption temporaire dans un couple autrement uniforme de l'arbre de transmission de sortie (111) du moteur à combustion (110) soit obtenu pour faciliter la libération des éléments de plateaux dans le dispositif d'embrayage (120).

2. Procédé selon la revendication 1, dans lequel le signal d'ajustement (Adj) est généré pendant l'intervalle d'activation de telle sorte qu'un couple (T) généré dans l'arbre de transmission (111) par le moteur à combustion (11) s'écarte (T_{E}, T_{U}, T_{Δ}) par rapport à une caractéristique nominale (T_{N}(α)) pour le moteur à combustion (110) sur un intervalle angulaire de l'arbre de transmission (111) correspondant à au moins un cycle de travail pour un cylindre du moteur à combustion (110).

3. Procédé selon la revendication 2, dans lequel le signal d'ajustement (Adj) est généré pendant l'intervalle d'activation de telle sorte que le couple (T) généré dans l'arbre de transmission (111) par le moteur à combustion (11) excède (T_{E}) un couple nominal (T_{N}(α)) sur un intervalle angulaire de l'arbre de transmission (111) correspondant à au moins un cycle de travail pour un cylindre du moteur à combustion (110).

4. Procédé selon la revendication 2, dans lequel le signal d'ajustement (Adj) est généré pendant l'intervalle d'activation de telle sorte que le couple (T) généré dans l'arbre de transmission (111) par le moteur à combustion (110) reste en dessous (Tu) d'un couple nominal (T_{N}(α)) sur un intervalle angulaire de l'arbre de transmission (111) correspondant à un cycle de travail pour un cylindre du moteur à combustion (110).

5. Procédé selon l'une quelconque des revendications précédentes, dans lequel le signal d'ajustement (Adj) est généré pendant l'intervalle d'activation de telle sorte que le couple (T) généré dans l'arbre de transmission (111) par le moteur à combustion (110) soit décalé dans le temps (T_{Δ}) par rapport à une séquence temporelle nominale (T_{N}(α)) pour un cycle de travail du moteur à combustion (110) au moins pendant une période correspondant à un cycle de travail pour un cylindre du moteur à combustion (110).

6. Programme informatique qui peut être téléchargé dans la mémoire interne (170) d'un ordinateur et qui comprend un logiciel pour commander les étapes selon l'une quelconque des revendications précédentes lorsque ledit programme est exécuté sur l'ordinateur.

7. Support lisible par ordinateur (170) sur lequel est stocké un programme, lequel programme est adapté pour permettre à un ordinateur de commander les étapes selon l'une quelconque des revendications 1 à 5.

8. Système de commande pour un train de transmission d'un véhicule à moteur, qui comporte un moteur à combustion (110) avec un arbre de transmission de sortie (111), une boîte de vitesse (130) qui peut être couplée mécaniquement à l'arbre de transmission (111) via un dispositif d'embrayage (120) et un agencement de roues motrices (140) qui est couplé mécaniquement à la boîte de vitesse (130), le train de transmission comportant en outre une unité d'injection de carburant (150) configurée pour générer un paramètre de commande, qui affecte l'injection de carburant (F) dans le moteur à combustion (110), lequel système de commande comprend :
- une unité de commande (100) configurée pour générer un signal d'ajustement (Adj) conçu pour réguler ledit au moins un paramètre de commande, **caractérisé en ce que** l'unité de commande (100) est configurée pour faciliter le désengagement du dispositif d'embrayage (120), et pour :
- recevoir un signal de commande (S) indiquant un démarrage d'une procédure de désengagement, le dispositif d'embrayage (120) étant destiné à être amené à une position ouverte, et en réponse à cette action
- pendant un intervalle d'activation, générer le signal d'ajustement (Adj) de telle sorte qu'un écart temporaire (M_{E}, M_{U}, M_{Δ}) sous la forme d'une interruption de rotation du moteur (M) soit obtenu, puis
- empêcher la génération du signal d'ajustement (Adj), de telle sorte que l'écart/interruption temporaire dans un couple autrement uniforme de l'arbre de transmission de sortie (111) du moteur à combustion (110) soit obtenu pour faciliter la libération des éléments de plateaux dans le dispositif d'embrayage (120).

9. Système de commande selon la revendication 8, dans lequel l'unité de commande (100) est configurée pour, pendant l'intervalle d'activation, générer le signal d'ajustement (Adj) de telle sorte qu'un couple (T) généré dans l'arbre de transmission (111) par le moteur à combustion (11) s'écarte (T_{E}, T_{U}, T_{Δ}) par rapport à une caractéristique nominale (T_{N}(α)) pour le moteur à combustion (110) sur un intervalle angulaire de l'arbre de transmission (111) correspondant à au moins un cycle de travail pour un cylindre du moteur à combustion (110).

10. Système de commande selon la revendication 9, dans lequel l'unité de commande (100) est configurée pour, pendant l'intervalle d'activation, générer le signal d'ajustement (Adj) de telle sorte que le couple (T) généré dans l'arbre de transmission (111) par le moteur à combustion (11) excède (T_{E}) un couple nominal (T_{N}(α)) sur un intervalle angulaire de l'arbre de transmission (111) correspondant à au moins un cycle de travail pour un cylindre du moteur à combustion (110).

11. Système de commande selon la revendication 9, dans lequel l'unité de commande (100) est configurée pour, pendant l'intervalle d'activation, générer le signal d'ajustement (Adj) de telle sorte que le couple (T) généré dans l'arbre de transmission (111) par le moteur à combustion (110) reste en dessous (Tu) d'un couple nominal (T_{N}(α)) sur un intervalle angulaire de l'arbre de transmission (111) correspondant à un cycle de travail pour un cylindre du moteur à combustion (110).

12. Système de commande selon l'une quelconque des revendications 9 à 11, dans lequel l'unité de commande (100) est configurée pour, pendant l'intervalle d'activation, générer le signal d'ajustement (Adj) de telle sorte que le couple (T) généré dans l'arbre de transmission (111) par le moteur à combustion (110) soit décalé dans le temps (T_{Δ}) par rapport à une séquence temporelle nominale (T_{N}(α)) pour un cycle de travail du moteur à combustion (110) au moins pendant une période correspondant à un cycle de travail pour un cylindre du moteur à combustion (110).

13. Système de commande selon l'une quelconque des revendications 8 à 12, dans lequel le véhicule à moteur comporte un dispositif de désengagement manuel (120) entre l'arbre de transmission (111) et la boîte de vitesse (130), lequel dispositif de désengagement manuel (120) est configuré pour, en réponse à un signal de désengagement (R), entraîner un désengagement mécanique d'au moins un premier élément de plateau (121) couplé à l'arbre de transmission (111) d'avec au moins un deuxième élément de plateau (122) couplé à la boîte de vitesse (130), et l'unité de commande (100) étant en outre configurée pour recevoir le signal de désengagement (R) et le traiter en tant que signal de commande (S).

14. Système de commande selon l'une quelconque des revendications 8 à 12, dans lequel la boîte de vitesse (130) est d'un type automatique et l'unité de commande (100) est en outre configurée pour recevoir le signal de commande (S) en provenance de la boîte de vitesse (130) en liaison avec le démarrage de la procédure de désengagement d'avec un engrenage.
